# EUROPÄISCHE PATENTSCHRIFT

(11) **EP 3 004 664 B1**
(45) Veröffentlichungstag und Bekanntmachung des Hinweises auf die Patenterteilung: **09.05.2018**
(21) Anmeldenummer: 14733546.7
(22) Anmeldetag: 05.06.2014
(51) Int. Cl.: F16B 23/00

(54) **SCHRAUBE MIT EINEM EINEN ANTRIEB AUFWEISENDEN SCHRAUBENKOPF**
SCREW WITH A SCREW HEAD WHICH HAS A DRIVE
VIS À TÊTE DOTÉE D'UN DISPOSITIF D'ENTRAÎNEMENT

(30) Priorität: 05.06.2013 DE 102013105810
(43) Veröffentlichungstag der Anmeldung: 13.04.2016
(73) Patentinhaber: EJOT GmbH & Co. KG, 57319 Bad Berleburg (DE)
(72) Erfinder: LANDSMANN, Nils, 59955 Winterberg - Langewiese (DE)
(74) Vertreter: Puschmann Borchert Bardehle Patentanwälte Partnerschaft mbB
(86) Internationale Anmeldenummer: PCT/EP2014/061714
(87) Internationale Veröffentlichungsnummer: WO 2014/195411

(56) Entgegenhaltungen:
- WO-A1-93/13323
- DE-A1- 3 501 414
- JP-A- 2011 133 090
- US-A- 3 481 243
- US-A1- 2011 182 696

## Beschreibung

Die Erfindung betrifft eine Schraube mit einem einen Antrieb aufweisenden Schraubenkopf gemäß dem Oberbegriff des Anspruchs 1.

Die DE 35 01 414 A1 offenbart eine Schraube mit einem einen Antrieb aufweisenden Schraubenkopf. Die zur Übertragung des Drehmoments vorgesehenen Nocken weisen eine orthogonal zur Schraubenebene liegende Nocken-Kopffläche auf, die seitlich eine Abschrägung zur Nockenseitenfläche aufweist

Aus dem Stand der Technik sind unter dem Markennamen "autosert" Schrauben mit einem einen Antrieb aufweisenden Schraubenkopf bekannt, wobei der Antrieb Nocken umfasst, welche durch um die Nocken herum eingebrachte Ausnehmungen gebildet werden, wobei die Nocken zur Übertragung des Drehmoments dienen. Weiter bekannt ist, dass die Nocken an ihrem, dem Schraubenkopf zugewandten Ende eine Nocken-Kopffläche aufweisen, welche gegenüber einer orthogonal zur Schraubenachse liegenden Ebene in Eindrehrichtung geneigt verläuft. Eine solche Gestaltung ist beispielsweise der US 5,171,117 A zu entnehmen.

Solche Schrauben sind besonders für automatische Schraubwerkzeuge geeignet, wobei ein besonders einfaches Kuppeln von einem Schrauberbit an die Schraube, insbesondere bei ständig rotierenden Werkzeugen, durch die in Eindrehrichtung verlaufende Neigung der Nocken-Kopffläche, erreicht wird.

Es ist Aufgabe der Erfindung einen verbesserten Antrieb anzugeben, der die Einführung eines Werkzeugs bei einem nichtdrehenden Werkzeug verbessert.

Gemäß der Erfindung ist daher vorgesehen, dass die Nocken in ihrer radialen Erstreckung derart angeordnet und gestaltet sind, dass sie ein in den Schraubenantrieb eingeführtes Werkzeug zentrieren, und ferner die Kopffläche in eine erste Fläche und eine zweite Fläche aufgeteilt ist, die je in einer Drehrichtung geneigt ist.

Indem die Kopffläche in zwei Flächen aufgeteilt ist, kann die Schraube in freier Drehrichtung schnell auf ein Drehwerkzeug aufgesetzt werden. Eine solche Gestaltung erweist sich besonders bei Klein- und Kleinstschrauben als vorteilhaft, da deren Handhabung, insbesondere das Aufsetzten auf ein Drehwerkzeug, ohnehin schwierig ist.

Vorzugsweise sind die Flächen so angeordnet, dass sich die beiden Flächen in einer Schnittlinie schneiden, die sich in der Mitte der Nocke befindet.

Dadurch ist gewährleistet, dass sich durch eine minimale Drehbewegung der Schraube eine ideale Einführung des Drehwerkzeugs in die Schraube ergibt. Auch hat sich herausgestellt, dass die Fertigung einer solchen Schraube mit einer symmetrischen Gestaltung der Kopffläche erheblich vereinfacht ist.

In einer weiteren vorteilhaften Ausgestaltung ist die Schnittlinie gegenüber der orthogonal zur Schraubenachse liegenden Ebene zur Schraubenmitte hin geneigt. Dies hat zur Folge, dass nicht nur die Mitnahmeelemente eines Drehwerkzeugs mit den Ausnehmungen der Nocken in Umfangsrichtung erleichtert eingeführt werden können, sondern auch eine Übereinstimmung in radialer Richtung erzwungen wird. Vorzugsweise kann eine Neigung der Schnittlinie von etwa 10° bis 30° gegenüber der orthogonal zur Schraubenachse liegenden Ebene gewählt werden.

Erfindungsgemäß schließen die beiden Flächen der Kopffläche an ihrer Schnittlinie einen Winkel zwischen 120° und 160° ein. Da ausgehend von dem Schraubenkopf zugewandten Ende die Neigung an der Kopffläche, die zur Drehmomentübertragung wirksamen Seitenflächen der Nocken reduziert, ergibt sich für diese Neigungswinkel eine ideale Einstellung bezüglich der Wirksamkeit der Einführung und der Drehmomentübertragung.

Vorzugsweise ist die Schnittlinie der ersten Fläche mit der zweiten Fläche verrundet. Die Verrundung der Schnittlinie führt zur leichteren Zuführung des Werkzeugs, da ein verkanten von Drehwerkzeug und Schnittkante vermieden wird.

Weitere Vorteile, Merkmale und Anwendungsmöglichkeiten von Ausführungsformen der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die zugeordneten Bezugszeichen verwendet. In der Zeichnung bedeutet:
- Fig. 1: eine perspektivische Ansicht einer Schraube;
- Fig. 2: eine Draufsicht auf den Schraubenkopf;
- Fig. 3: einen Schnitt B-B, und
- Fig. 4: einen Schnitt A-A.

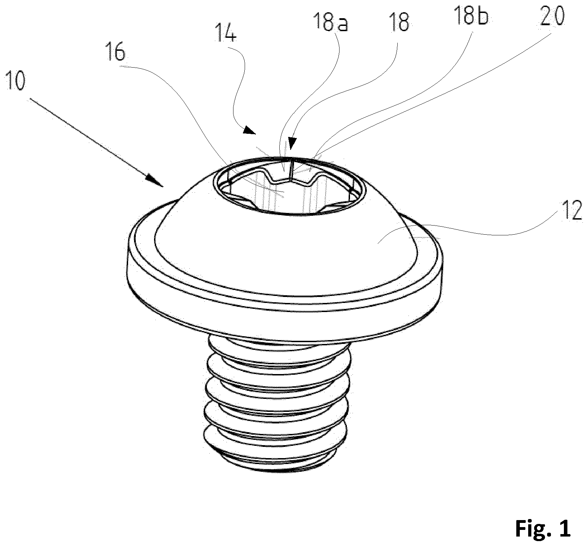

Fig. 1 zeigt eine Schraube 10 mit einem in den Schraubenkopf 12 eingebrachten Antrieb 14. Zur Drehmomentübertragung umfasst der Antrieb 14 der Schraube Nocken 16, welche durch Ausnehmungen um die Nocken 16 herumgebildet werden. Erfindungsgemäß weist eine Nocke 16 eine Nockenkopffläche 18 auf, die zwei gegenüber einer orthogonal zur Schraubenachse liegenden Ebene geneigte Flächen 18a, 18b aufweist. Auf die Funktion der jeweiligen Neigungen der Nockenkopffläche 18 wird in den folgenden Figuren näher eingegangen.

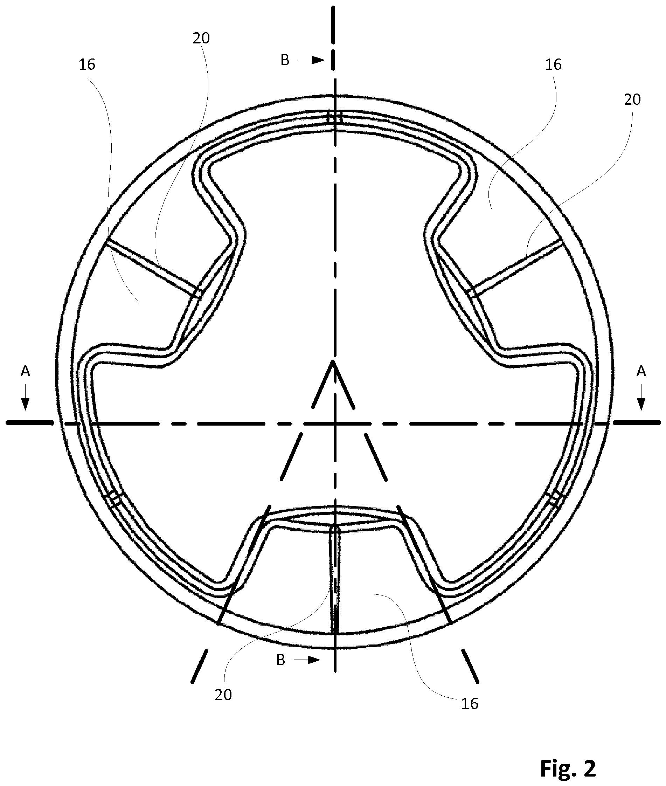

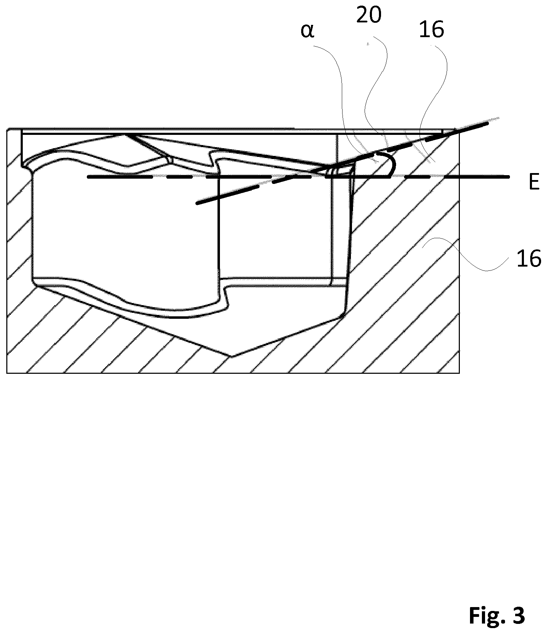

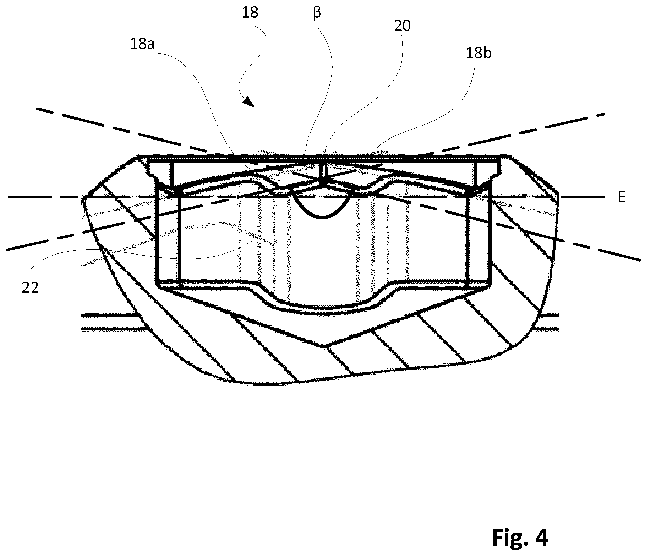

Fig. 2 zeigt die Draufsicht auf eine erfindungsgemäße Schraube, wobei diese drei Nocken 16 aufweist, die in ihrer Nockenmitte einen linienförmigen Anlagebereich aufweisen, der sich über die Höhe der Nocke erstreckt, um ein Werkzeug in der Schraube zu zentrieren, die in der Mitte der Nocke 16 liegen. Die Schnittlinien 20 liegen auf der jeweiligen Winkelhalbierenden des für die Breite der Nocke 16 maßgeblichen Kreissektors. Ferner sind die Schnittlinien 20 dargestellt, deren Schnitte, in der Fig. 3 der Schnitt B-B und in der Fig. 4 der Schnitt A-A, näher erläutert werden.

Fig. 3 zeigt den Schnitt B-B, der den Schraubenkopf in der Mitte der Nocke 16 schneidet. Wie in dieser Darstellung gut zu erkennen ist, ist die Schnittlinie 20 der Flächen 18a und 18b gegenüber einer orthogonal zur Schraubenachse liegenden Ebene E in radialer Richtung um einen Winkel α geneigt. Durch diese Neigung α wird das Einführen eines Werkezeugs in radialer Richtung erleichtert, da ein Abgleiten in den zentralen Zentrierbereich zwischen den Nocken erzwungen wird. So wird bei Einführen eines nicht dargestellten Werkzeugs dieses automatisch in die Schraubenmitte geleitet.

Fig. 4 zeigt die Darstellung des Schnitts A-A aus Fig. 2, wobei gut erkennbar ist, dass die beiden Flächen, die sich in einer Schnittlinie 20 schneiden je in eine Drehrichtung gegenüber der orthogonal zur Schraubenachse liegenden Ebene E geneigt sind. Die Schnittlinie 20 der beiden geneigten Flächen 18a, 18b liegt in der Mitte der Nocke. Entsprechend ist gewährleistet, dass je nach Lage von Mitnahmeelementen eines einzusetzenden Drehwerkzeugs die Schraube 10 nur eine minimale Drehbewegung umsetzen muss, damit die Mitnahmeelemente in eine Lage korrespondierend zu den Ausnehmungen, um die Nocken passend angestellt werden können. Die beiden Flächen schließen dabei einen Winkel β von etwa 150° ein. Dieser Winkel ist so gewählt, dass er die Einführhilfe und das notwendige Abgleiten der Mitnahmeelemente an der Nockenkopffläche 18 gewährleisten und dennoch eine maximale Nockenseitenfläche 22 realisiert, damit das notwendige Drehmoment problemlos übertragen werden kann.

Durch diese Lösung ist es nun bei sehr kleinen Schrauben, deren Handhabung ohnehin schwierig ist, möglich, diese auf einfache Weise sicher auf ein Drehwerkzeug aufzusetzen.

## Patentansprüche

1. Schraube (10) mit einem einen Antrieb (14) aufweisenden Schraubenkopf (12), wobei der Antrieb (14) Nocken (16) umfasst, welche durch um die Nocken (16) herum eingebrachte Ausnehmungen gebildet werden, wobei die Nocken (16) zur Übertragung des Drehmoments dienen, wobei ferner eine Nocke (16) an ihrem, dem Schraubenkopf (12) zugewandten Ende eine Nockenkopffläche (18) aufweist, welche gegenüber einer orthogonal zur Schraubenachse liegenden Ebene geneigt verläuft, **dadurch gekennzeichnet, dass** die Nocken (16) in ihrer radialen Erstreckung derart angeordnet und gestaltet sind, dass sie ein in den Schraubenantrieb eingeführtes Werkzeug zentrieren, und dass die Nockenkopffläche (18) eine erste Fläche (18a) und eine zweite Fläche (18b) aufweist, die jeweils in ihre Drehrichtung geneigt sind und sich in einer Schnittlinie (20) schneiden.

2. Schraube (10) nach einem der vorangehenden Ansprüche, **dadurch gekennzeichnet, dass** die Schnittlinie (20) der beiden Flächen (18a, 18b) in der Mitte der Nocke (16) liegt.

3. Schraube (10) nach einem der vorangehenden Ansprüche, **dadurch gekennzeichnet, dass** die Schnittlinie (20) der beiden Flächen (18a, 18b) gegenüber der orthogonal zur Schraubenachse liegenden Ebene geneigt ist.

4. Schraube (10) nach Anspruch 3, **dadurch gekennzeichnet, dass** die Schnittlinie (20) der beiden Flächen (18a, 18b) in einem Winkel von 10° bis 30° gegenüber der orthogonal zur Schraubenachse liegenden Ebene geneigt ist.

5. Schraube (10) nach einem der vorangehenden Ansprüche, **dadurch gekennzeichnet, dass** die beiden Flächen (18a, 18b) einen stumpfen Winkel einschließen.

6. Schraube (10) nach Anspruch 5, **dadurch gekennzeichnet, dass** die beiden Flächen (18a, 18b) einen Winkel zwischen 120° und 160° einschließen.

## Claims

1. Screw (10) with a screw head (12) which has a drive (14), which drive (14) comprises cams (16) that are formed by recesses introduced around the cams (16), which cams (16) are used to transmit the torque, in which, moreover, on the cam end facing the screw head (12), a cam (16) has a cam head surface (18) which is inclined with respect to a plane that extends orthogonal to the screw axis, **characterized in that** the cams (16), in their radial extension, are arranged and designed such that they center a tool introduced into the screw drive, and the cam head surface (18) has a first surface (18a) and a second surface (18b), each of which is inclined in its respective rotational direction and which intersect each other in an intersection line (20).

2. Screw (10) as claimed in one of the preceding claims, **characterized in that** the intersection line (20) of the two surfaces (18a, 18b) is at the center of the cam (16).

3. Screw (10) as claimed in one of the preceding claims, **characterized in that** the intersection line (20) of the two surfaces (18a, 18b) is inclined with respect to the plane that extends orthogonal to the screw axis.

4. Screw (10) as claimed in claim 3, **characterized in that** the intersection line (20) of the two surfaces (18a, 18b) is inclined at an angle of between 10° and 30° relative to the plane that extends orthogonal to the screw axis.

5. Screw (10) as claimed in one of the preceding claims, **characterized in that** the two surfaces (18a, 18b) define an obtuse angle between them.

6. Screw (10) as claimed in claim 5, **characterized in that** the two surfaces (18a, 18b) define an angle of between 120° and 160° between them.

## Revendications

1. Vis (10) pourvue d'une tête de vis (12) comprenant un entraînement (14), l'entraînement (14) comportant des cames (16), lesquelles sont formées par des évidements ménagés autour des cames (16), les cames (16) servant à transmettre le couple, une came (16) présentant en outre à son extrémité tournée vers la tête de vis (12) une surface de tête de came (18), laquelle s'étend de manière inclinée par rapport à un plan perpendiculaire à l'axe de vis, **caractérisée en ce que** les cames (16) sont agencées et conçues dans leur étendue radiale de manière à centrer un outil introduit dans l'entraînement de vis, et **en ce que** la surface de tête de came (18) présente une première surface (18a) et une deuxième surface (18b), qui sont inclinées chacune dans leur sens de rotation et qui se coupent dans une ligne de coupe (20).

2. Vis (10) selon l'une quelconque des revendications précédentes, **caractérisée en ce que** la ligne de coupe (20) des deux surfaces (18a, 18b) se situe au centre de la came (16).

3. Vis (10) selon l'une quelconque des revendications précédentes, **caractérisée en ce que** la ligne de coupe (20) des deux surfaces (18a, 18b) est inclinée par rapport au plan perpendiculaire à l'axe de vis.

4. Vis (10) selon la revendication 3, **caractérisée en ce que** la ligne de coupe (20) des deux surfaces (18a, 18b) est inclinée selon un angle de 10° à 30° par rapport au plan perpendiculaire à l'axe de vis.

5. Vis (10) selon l'une quelconque des revendications précédentes, **caractérisée en ce que** les deux surfaces (18a, 18b) forment un angle obtus.

6. Vis (10) selon la revendication 5, **caractérisée en ce que** les deux surfaces (18a, 18b) forment un angle compris entre 120° et 160°.
